Europäisches Patentamt

European Patent Office

Office européen des brevets

(11) Veröffentlichungsnummer: **0 230 058**
**B1**

# (12) EUROPÄISCHE PATENTSCHRIFT

(45) Veröffentlichungstag der Patentschrift:
24.05.89

(21) Anmeldenummer: 86200087.4

(22) Anmeldetag: 21.01.86

(51) Int. Cl.⁴: **B01D 53/36**, B01D 53/02,
B01J 20/34, B01J 21/20

(54) Verfahren zum Entfernen von Stickstoffoxiden und Schwefeloxiden aus einem Abgas.

(43) Veröffentlichungstag der Anmeldung:
29.07.87 Patentblatt 87/31

(45) Bekanntmachung des Hinweises auf die Patenterteilung:
24.05.89 Patentblatt 89/21

(84) Benannte Vertragsstaaten:
BE DE FR IT NL

(56) Entgegenhaltungen:
DE-A- 2 737 117
DE-A- 3 407 884
FR-A- 2 189 113

(73) Patentinhaber: **LABORATORIUM FÜR
ADSORPTIONSTECHNIK GMBH, Gwinnerstrasse 27/33,
D-6000 Frankfurt am Main(DE)**

(72) Erfinder: **Menig, Harald, Prof. Dr.-Ing., Stettiner
Strasse 97, D-6374 Steinbach(DE)**
Erfinder: **Storp, Klaus, Dr., Fritz-Schubert-Ring 46,
D-6000 Frankfurt am Main 60(DE)**
Erfinder: **Wirth, Johann, Dr., Elfelweg 7, D-6368 Bad
Vilbel(DE)**
Erfinder: **Rittinger, Günter, Lessingstrasse 73,
D-6367 Karben 6(DE)**
Erfinder: **Hohmann, Volker, Frankenstrasse 36,
D-6457 Maintal 4(DE)**

(74) Vertreter: **Rieger, Harald, Dr., Reuterweg 14,
D-6000 Frankfurt am Main(DE)**

## Beschreibung

Die Erfindung betrifft ein Verfahren zum Entfernen von Stickstoffoxiden ($NO_x$) und Schwefeloxiden aus einem Sauerstoff und Wasserdampf enthaltenden Abgas, das man bei Temperaturen von 40 bis 120°C mit aktivem Aluminiumoxid und Aktivkohle als Katalysatoren in Kontakt bringt, wobei das Aluminiumoxid vor allem die Stickstoffoxide bindet und die Aktivkohle die Schwefeloxide entfernt und sie als Schwefelsäure bindet und wobei man zum Regenerieren der beladenen Katalysatoren Reduktionsgas verwendet.

Ein bekanntes Verfahren zum Entfernen von Schwefeloxiden aus Abgas, insbesondere Rauchgas, mit Hilfe von Aktivkohle ist in der deutschen Offenlegungsschrift DE-A 3 407 884 beschrieben. Die Regenerierung der Aktivkohle, die sich während des Reinigungsbetriebs mit Schwefelsäure belädt, erfolgt durch schwefelhaltiges Reduktionsgas ($H_2S$ und/oder $CS_2$ und/oder COS). Dabei entsteht Elementarschwefel, der teilweise gewonnen wird.

In EP-A 174 036 (Anmeldetag 04.06.85, Veröffentlichungstag 12.03.86, Priorität 20.07.86) wird die gleichzeitige Entfernung von Sitckstoffoxiden und Schwefeloxiden aus einem Sauerstoff und Wasserdampf enthaltenden Gas beschrieben, wobei man das Gas über einen kombinierten Katalysator leitet, der im wesentlichen aus akti vem Aluminiumoxid und Aktivkohle besteht. Die Regenerierung des kombinierten Katalysators erfolgt in einer einzigen Regenerationszone bevorzugt durch Zufuhr von Wasserstoff, der aber auch ganz oder teilweise durch Kohlenwasserstoffe ersetzt sein kann. In der Regenerationszone erzeugt man dabei ein schwefelhaltiges Reduktionsgas ($H_2S$ und/oder $CS_2$ und/oder COS), welches die Beladung des kombinierten Katalysators zu Stickstoff und Elementarschwefel reduziert. Dieser Schwefel wird auch hierbei teilweise gewonnen.

Der Erfindung liegt die Aufgabe zugrunde, das bekannte Verfahren der DE-A 3 407 884 und das Verfahren der EP-A 174 036 weiterzuentwickeln. Dabei soll die Reinigungsleistung und die Regenerierung einerseits des aktiven Aluminiumoxids und andererseits der Aktivkohle möglichst unabhängig voneinander reguliert werden können. Beim eingangs genannten Verfahren geschieht dies erfindungsgemäß dadurch, daß man das Abgas zuerst über aktives Aluminiumoxid leitet und dabei die Stickstoffoxide weitgehend und gleichzeitig einen Teil der Schwefeloxide entfernt und anschließend das teilgereinigte, Sauerstoff und Wasserdampf enthaltende Abgas über die Aktivkohle leitet, daß man das beladene Aluminiumoxid in einer $Al_2O_3$-Regeneration und getrennt davon die beladene Aktivkohle in einer Aktivkohle-Regeneration regeneriert, wobei man der Aktivkohle-Regeneration wasserstoffhaltiges Reduktionsgas zuführt, bei einer höchsten Temperatur von 400 bis 550°C den Schwefel und die schwefelhaltigen Verbindungen von der Aktivkohle entfernt und aus der Aktivkohle-Regeneration ein Schwefelverbindungen enthaltendes Reduktionsgas abzieht, das man in die $Al_2O_3$-Regeneration leitet, mit dem Schwefelverbindungen enthaltenden Reduktionsgas bei höchsten Temperaturen von 200 bis 400°C die Beladung des Aluminiumoxids zu Schwefel und Stickstoff reduziert und die Beladung desorbiert, und schwefelhaltiges Desorptionsgas ableitet.

Wenn man das Verfahren für die Reinigung von Rauchgas anwendet, empfiehlt es sich, das $NO_x$-haltige Gas mit einer Temperatur von etwa 40 bis 80°C und einer relativen Wasserdampfsättigung von 35 bis 90 % zunächst über das aktive Aluminiumoxid zu leiten. Der Sauerstoffgehalt der Rauchgase ist im allgemeinen ausreichend, um spätestens im Bereich des Aktivkohle-Katalysators $SO_2$ zu $SO_3$ zu oxidieren, damit durch Umsetzung mit dem gleichzeitig vorhandenen Wasserdampf Schwefelsäure entstehen kann.

Es empfiehlt sich, für das Verfahren ein aktives Aluminiumoxid mit einer Körnung von etwa 2 bis 5 mm, einer Rütteldichte von 700 bis 800 g/l und einer BET-Oberfläche, bestimmt über die $N_2$-Isotherme bei −196°C, von 200 bis 380 m²/g zu verwenden. Die Aktivkohle weist vorzugsweise eine BET-Oberfläche von mindestens 1000 m²/g, ein Mikroporenvolumen von 0,5 bis 0,7 cm³/g und ein Makroporenvolumen von 0,45 bis 0,60 cm³/g auf. Grundsätzlich ist körnige oder geformte Aktivkohle geeignet, wobei man die Korngröße, je nachdem, ob man mit Festbett, Wirbelbett oder z.B. mit Rutschbett arbeiten will, entsprechend wählt. Diese Auswahl wird vor allem auch den zulässigen Druckverlust des zu reinigenden Abgases berücksichtigen. Für Festbett- und Rutschbett-Adsorber hat sich eine zylindrische Formkohle mit etwa 4 mm Durchmesser bewährt.

Beim erfindungsgemäßen Verfahren zieht man aus der $Al_2O_3$-Regeneration ein schwefelhaltiges Desorptionsgas ab. Vorzugsweise kühlt man dieses Desorptionsgas und entfernt den auskondensierenden flüssigen Schwefel. Das verbleibende Desorptionsgas, das noch restliches $H_2S$ ent hält, leitet man zweckmäßigerweise mindestens zum Teil in die Aktivkohle-Regeneration. Dadurch wird der Kreislauf des in der Aktivkohle-Regeneration erzeugten $H_2S'$ geschlossen.

Beim erfindungsgemäßen Verfahren wird in der $Al_2O_3$-Regeneration das auf dem Katalysator bevorzugt in Form von Sauerstoffsäuren des Stickstoffs abgeschiedene $NO_x$ zu elementarem Stickstoff und die abgeschiedene Schwefelsäure zu elementarem Schwefel umgesetzt. Der Schwefel wird durch Desorption gewonnen, wobei in der $Al_2O_3$-Regeneration praktisch kein Schwefel zur Erzeugung von $H_2S$ (oder $CS_2$ bzw. COS) verbraucht wird, da man dieses $H_2S$ allein oder im Gemisch mit COS oder $CS_2$ mit geeigneter Temperatur aus der Aktivkohle-Regeneration heranführt. In der Aktivkohle-Regeneration wird im wesentlichen nur die abgeschiedene Schwefelsäure mittels $H_2S$, das auch ganz oder teilweise durch $CS_2$ oder COS ersetzt sein kann, zu Elementarschwefel umgesetzt. Stickstoffoxide scheiden sich auf der Aktivkohle praktisch nicht ab. Der in der Regeneration auf der Aktivkohle entstandene Schwefel wird dann mit Reduktionsgas, insbesondere Wasserstoff oder auch Kohlenwasserstoffen, in einer exothermen Reaktion zu $H_2S$ hydriert und bei Verwendung von Kohlenwasserstoffen auch teilweise zu COS und $CS_2$ umgesetzt. Eine Desorption von elementarem Schwefel erfolgt in der Aktivkohle-Regeneration nicht. In die Zone der $H_2S$-Erzeugung kann, falls notwendig, Schwefeldampf eingespeist werden, wobei man insbesondere den Schwefel verwendet, der beim Kühlen des Desorptionsgases aus der $Al_2O_3$-Regeneration anfällt.

Es ist zweckmäßig, wenn man zumindest in der Anfahrphase der Regeneration einen Teilstrom des Schwefelverbindungen enthaltenden Reduktionsgases aus der Aktivkohle-Regeneration auf 300 bis 500°C erhitzt und in die Aktivkohle-Regeneration zurückleitet, um die Temperaturen auf ausreichendes Niveau zu bringen.

Zusätzliche Erläuterungen über die Umsetzungen und die dabei ablaufenden Reaktionen in der Aktivkohle-Regeneration sind in der DE-A 3 407 884 enthalten.

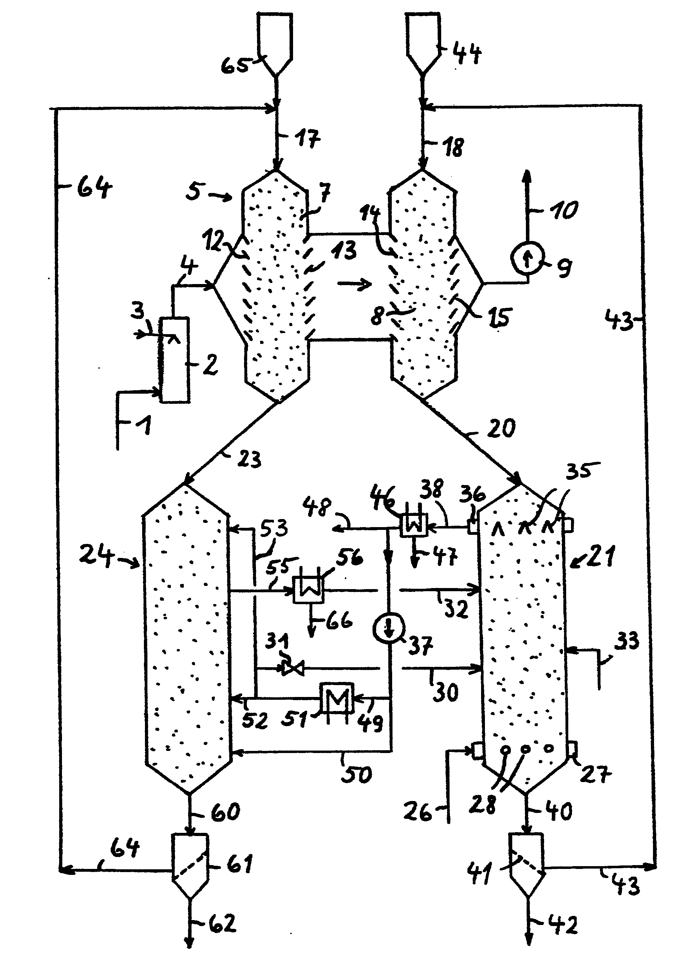

Weitere Einzelheiten des Verfahrens werden mit Hilfe der Zeichnung erläutert.

Sauerstoffhaltiges, weitgehend entstaubtes Abgas tritt durch die Leitung 1 in einen Einspritzkühler 2 ein. Bei dem Abgas handelt es sich üblicherweise um ein Rauchgas aus einem Kraftwerk oder einer anderen Großfeuerungsanlage. Im Einspritzkühler 2 wird Wasser aus der Leitung 3 verdüst, so daß das Abgas in der Leitung 4 eine relative Wasserdampfsättigung von 35 bis 90 % aufweist. Die Temperatur des Abgases in der Leitung 4 liegt im Bereich von 40 bis 120°C und vorzugsweise 50 bis 80°C. In der Reinigungsanlage 5 wird das Abgas, das Stickstoffoxide ($NO_x$) und Schwefeloxide, insbesondere $SO_2$, enthält, zunächst durch die Schüttung eines ersten Katalysators 7 und anschließend durch die Schüttung eines zweiten Katalysators 8 geleitet. Gereinigtes Gas zieht unter der Wirkung des Gebläses 9 durch die Leitung 10 zum Kamin ab.

Beim ersten Katalysator 7 handelt es sich um körniges Aluminiumoxid, das zwischen jalousieartigen, gasdurchlässigen Wänden 12,13 angeordnet ist und ein langsam nach unten wanderndes Rutschbett bildet. Der zweite Katalysator 8, bei dem es sich um körnige Aktivkohle handelt, ist ebenfalls als Rutschbett zwischen gasdurchlässigen Wänden 14,15 angeordnet. Regeneriertes und teilweise auch frisches Aluminiumoxid läuft durch die Leitung 17 zu, die körnige Aktivkohle kommt aus der Leitung 18.

Der $Al_2O_3$-Katalysator 7 bindet vor allem die Stickstoffoxide und daneben auch einen gewissen Anteil der im Abgas vorhandenen Schwefeloxide. In den Aktivkohle-Katalysator 8 tritt ein bereits von Stickstoffoxiden befreites Abgas ein, welchem beim Durchströmen der Aktivkohleschüttung die Schwefeloxide entzogen werden. Unter der katalytischen Wirkung der Aktivkohle wird dabei $SO_2$ mit dem vorhandenen Sauerstoff zu $SO_3$ oxidiert, welches mit dem ebenfalls vorhandenen Wasserdampf zu Schwefelsäure umgewandelt wird. Auf diese Weise belädt sich die Aktivkohle mit $H_2SO_4$, das beim Regenerieren der Aktivkohle wieder entfernt werden muß. Hierzu wird die beladene Aktivkohle durch die Leitung 20 kontinuierlich der Aktivkohle-Regeneration 21 zugeführt. Gleichzeitig wird das mit adsorbierten Stickstoffoxiden und daraus entstandenen Säuren sowie $H_2SO_4$ beladene Aluminiumoxid des ersten Katalysators 7 kontinuierlich durch die Leitung 23 in die $Al_2O_3$-Regeneration 24 geleitet. Die Apparatur der Aktivkohle-Regeneration 21 und der $Al_2O_3$-Regeneration 24 ist im wesentlichen ein Schacht mit Zufuhr- und Ableitungseinrichtungen für Gase. Die von der Beladung zu befreienden Katalysatoren bewegen sich in dem Schacht kontinuierlich als Schüttung nach unten, während Reduktionsgase durch sie hindurchströmen.

Im vorliegenden Fall wird davon ausgegangen, daß man der Aktivkohle-Regneration 21 in der Nähe des unteren Endes des Schachtes durch die Leitung 26 Wasserstoff etwa von Umgebungstemperatur zuführt. An die Stelle des Wasserstoffs können auch Kohlenwasserstoffe, z.B. $CH_4$ oder technische, wasserstoffhaltige Gase, treten. Um den Wasserstoff in die Aktivkohle-Schüttung hinein möglichst gleichmäßig zu verteilen, ist eine Ringleitung 27 vorgesehen, von welcher mehrere Einzeldüsen 28 ausgehen, die verteilt im Schacht münden. Der Wasserstoff aus den Düsen 28 kühlt zunächst die regenerierte Aktivkohle beim Aufwärtsströmen, wobei er auf die Regenerationstemperaturen, die etwa bei 400°C beginnen, aufgeheizt wird. Sodann kommt der Wasserstoff mit körniger Aktivkohle in Kontakt, die durch vorausgegangene Reduktion mit Elementarschwefel beladen ist, wobei der Schwefel entfernt und $H_2S$ gebildet wird. Dieses $H_2S$ wandelt weiter die Schwefelsäure der aus der Leitung 20 herangeführten beladenen Aktivkohle in Elementarschwefel und Wasser um.

Da die ablaufenden Reaktionen exotherm sind, bilden sich in der Aktivkohle-Regeneration höchste Temperaturen von 400 bis 550°C aus, die vor allem im mittleren Bereich des Regenerationsschachtes herrschen. Falls es notwenig ist, was vor allem in der Anfahrphase der Regenerationsanlage der Fall sein kann, wird der Regeneration 21 heißes, $H_2S$-reiches Gas über die Leitung 30 durch das geöffnete Ventil 31 zugeführt. Der Regeneration 21 wird oberhalb der Mitte des Schachtes zusätzlich durch die Leitung 32 schwefelhaltiges Desorptionsgas aufgegeben. Da eine große Menge an $H_2S$ nötig ist, um sämtliches $H_2SO_4$ der Aktivkohle-Beladung in Elementarschwefel und Wasser umzuwandeln und genügend $H_2S$ für die $Al_2O_3$-Regeneration zur Verfügung zu haben, ist das Einleiten von zusätzlichem Schwefeldampf aus einem nicht dargestellten Verdampfer durch die Leitung 33 möglich.

Aus dem oberen Bereich der Regeneration 21 wird über nach unten offene Schächte 35, die mit einer Ringleitung 36 in Verbindung stehen, unter der Wirkung des Gebläses 37 durch die Leitung 38 ein Schwefelverbindungen enthaltendes Reduktionsgas abgezogen. Dieses Reduktionsgas enthält vor al-

lem $H_2S$, wenn man der Regeneration 21 durch die Lei tung 26 Wasserstoff zuführt. Verwendet man statt des Wasserstoffs jedoch Kohlenwasserstoffe, z.B. $CH_4$, so bilden sich in der Regeneration zum Teil auch $CS_2$ und COS, welche die Schwefelsäure der Aktivkohle-Beladung ebenfalls zu Elementarschwefel umwandeln und diesen Elementarschwefel ablösen. Regenerierte Aktivkohle verläßt die Regeneration 21 durch die Leitung 40 und wird zunächst einem Sieb 41 zugeführt, um Staub und Feinkorn etwa mit Korngrößen von höchstens 2 mm abzutrennen und in der Leitung 42 zu entfernen. Die regenerierte körnige Aktivkohle gelangt auf dem Transportweg 43 zur Wiederverwendung zurück zur Leitung 18, wobei frische Aktivkohle in der benötigten Menge aus dem Vorratsbehälter 44 zugespeist wird.

Das Reduktionsgas der Leitung 38 enthält auch noch Wasserdampf, deshalb wird das Gas zunächst durch den Kühler 46 geleitet, wobei sich wasserhaltiges Kondensat bildet, das man in der Leitung 47 abzieht. Einen Teilstrom des Gases aus dem Kühler 46 entfernt man durch die Leitung 48 aus dem Verfahren, um den aus dem abgeschiedenen Stickstoffoxiden gebildeten Stickstoff auszuschleusen. Die Hauptmenge des Reduktionsgases wird durch das Gebläse 37 weitergefördert und in zwei Teilströme in die Leitungen 49 und 50 aufgeteilt. Das Reduktionsgas der Leitung 50, das Temperaturen im Bereich von 20 bis 60°C aufweist, wird in den unteren Bereich der $Al_2O_3$-Regeneration 24 hinein verteilt und strömt dort aufwärts durch die Aluminiumoxid-Schüttung, die von dem Gas zunächst gekühlt wird. Das Gas der Leitung 49 wird im Erhitzer 51 auf Temperaturen von etwa 300 bis 500°C erhitzt und zum Teil durch die Leitung 52 unterhalb der Mitte des Schachtes in die Regeneration 24 geleitet. Einen zweiten Teilstrom des heißen Regenerationsgases führt man durch die Leitung 53 dem oberen Bereich der Regeneration 24 zu. Die Regeneration 24 weist etwas oberhalb der Mitte eine Absaugleitung 55 auf, die zu einem Kühler 56 führt. Deshalb strömen die Gase der Leitungen 50 und 52 im Gegenstrom zu der sich nach unten bewegenden Aluminiumoxid-Schüttung aufwärts bis zur Absaugleitung 55, wogegen das heiße Reduktionsgas aus der Leitung 53 in der Regeneration 24 im Gleichstrom mit dem Aluminimoxid abwärts strömt und ebenfalls in die Ableitung 55 gelangt. Das $H_2S$-reiche Reduktionsgas wandelt die Beladung des Aluminiumoxids, die aus Stickstoffoxiden, Sauerstoffsäuren des Stickstoffs und Schwefelsäure besteht, zu Stickstoff und Schwefel um, die beide in das Desorptionsgas der Absaugleitung 55 gelangen. Durch die exothermen Reaktionen in der Regeneration 24 treten dort höchste Temperaturen bis 400°C auf und schließlich verläßt ein gekühltes und von der Beladung befreites Aluminiumoxid in der Leitung 60 die Regeneration. In einer Siebeinrichtung 61 wird Feinkorn etwa von höchstens 2 mm Korngröße und Staub abgetrennt und in der Leitung 62 abgeleitet. Das körnige, regenerierte Aluminiumoxid gelangt auf dem Transportweg 64 zur Leitung 17, wobei aus dem Vorratsbehälter 65 frischer $Al_2O_3$-Katalysator in der benötigten Menge zugespeist wird.

Das Desorptionsgas der Leitung 55 wird im Kühler 56 so weit gekühlt, daß der dampfförmige Schwefel weitgehend kondensiert und flüssig in der Leitung 66 abgezogen werden kann. Falls nötig, kann ein Teil dieses Schwefels durch die Leitung 33 in die Aktivkohle-Regeneration 21 eingespeist werden. Das verbleibende Desorptionsgas führt man in der bereits beschriebenen Weise durch die Leitung 32 in die Regeneration 21.

Um die zeichnerische Darstellung des Verfahrens einfacher und übersichtlicher zu machen, wurde darauf verzichtet, bei den Mündungen der Leitungen 30,32,50,52 und 53 zugehörige Verteileinrichtungen an und in der zugehörigen Regeneration darzustellen. Diese Verteileinrichtungen bestehen zweckmäßigerweise jeweils aus einer Ringleitung und im Regenerationsschacht mündenden Einzeldüsen, wie das für die Wasserstoff-Zufuhrleitung 26 mit der zugehörigen Ringleitung 27 und den Einzeldüsen 28 dargestellt ist. Ferner gehören zur Absaugleitung 55 in der Regeneration befindliche Schächte sowie eine Ringleitung, wie das zusammen mit der Regeneration 21 durch die Schächte 35 und die Ringleitung 36 dargestellt ist. Diese Einzelheiten der apparativen Ausgestaltung sind dem Fachmann aber geläufig.

<u>Beispiel:</u>

In einer der Zeichnung entsprechenden Versuchsanlage wird durch die Leitung 1 ein Rauchgas in einer Menge von 400 $Nm^3/h$ und mit einer Temperatur von 130°C in den Verdampfungskühler 2 geleitet. Das Rauchgas hat folgende Zusammensetzung:
$N_2$ 74,6 Vol.%
$CO_2$ 13,25 Vol.%
$H_2O$ 7,15 Vol.%
$O_2$ 5,0 Vol.%.

Pro $Nm^3$ trockenes Gas sind darin als Verunreinigungen 3300 mg $SO_2$ und 800 mg $NO_x$ (als $NO_2$ gerechnet) enthalten. Das Rauchgas der Leitung 4 ist auf 65°C gekühlt, sein Wasserdampfgehalt entspricht einem Taupunkt von 50°C.

Pro Stunde laufen durch das Bett 7 22 kg $Al_2O_3$-Katalysator und durch das Bett 8 2 kg Aktivkohle-Katalysator. Der $Al_2O_3$-Katalysator besteht aus Kügelchen von 3 bis 5 mm Durchmesser mit einer Rütteldichte von 660 g/l und einer Oberfläche nach BET von 280 $m^2/g$. Die Aktivkohle ist eine zylindrische Formkohle mit 4 mm Durchmesser, einer BET-Oberfläche von 1250 $m^2/g$ und einer Rütteldichte von 380 g/l. Durch den $Al_2O_3$-Katalysator werden aus dem Rauchgas 96 % der Stickstoffoxide und etwa die Hälfte des $SO_2$ entfernt, das restliche $SO_2$ wird am Aktivkohle-Katalysator gebunden. Der Gesamtabschei-

degrad für SO$_2$ beträgt 98 %.

Die Ströme, die in die beiden Regenerationen 21 und 24 eingeleitet sowie aus und zwischen diesen abgezogen werden, sind folgende:

| Leitung | Menge pro Stunde | | Temperatur (°C) | |
|---|---|---|---|---|
| Wasserstoff durch Leitung 26 | | 2 Nm$^3$ | etwa | 20 |
| Desorptionsgas durch Leitung 32 | etwa | 69 Nm$^3$ | | 120 |
| Reduktionsgas in Leitung 38 | etwa | 71 Nm$^3$ | | 140 |
| Abgas in Leitung 48 | | 150 l | | 40 |
| Reduktionsgas in Leitung 50 | | 25 Nm$^3$ | | 40 |
| Reduktionsgas in Leitung 52 | | 20 Nm$^3$ | | 350 |
| Reduktionsgas in Leitung 53 | | 25 Nm$^3$ | | 350 |
| Desorptionsgas in Leitung 55 | etwa | 70 Nm$^3$ | etwa | 240 |
| Schwefel in Leitung 66 | | 0,62 kg | | 120 |

In der Aktivkohle-Regeneration 21 liegt die Temperatur im Bereich unterhalb der Schächte 35 bei etwa 150°C, die höchste Temperatur, die etwa in der Mitte der Regneration erreicht wird, beträgt 480°C. In der Al$_2$O$_3$-Regeneration 24 wird etwa in der Mitte eine höchste Temperatur von 300°C erreicht. Im Gas der Leitungen 32 und 38 reichert sich der Stickstoff auf eine Konzentration von etwa 50 % an.

## Patentansprüche

1. Verfahren zum Entfernen von Stickstoffoxiden (NO$_x$) und Schwefeloxiden aus einem Sauerstoff und Wasserdampf enthaltenden Abgas, das man bei Temperaturen von 40 bis 120°C mit aktivem Aluminiumoxid und Aktivkohle als Katalysatoren in Kontakt bringt, wobei das Aluminiumoxid vor allem die Stickstoffoxide bindet und die Aktivkohle die Schwefeloxide entfernt und sie als Schwefelsäure bindet und wobei man zum Regenerieren der beladenen Katalysatoren Reduktionsgas verwendet, dadurch gekennzeichnet, daß man das Abgas zuerst über aktives Aluminiumoxid leitet und dabei die Stickstoffoxide weitgehend und gleichzeitig einen Teil der Schwefeloxide entfernt und anschließend das teilgereinigte, Sauerstoff und Wasserdampf enthaltende Abgas über die Aktivkohle leitet, daß man das beladene Aluminiumoxid in einer Al$_2$O$_3$-Regeneration und getrennt davon die beladene Aktivkohle in einer Aktivkohle-Regeneration regeneriert, wobei man der Aktivkohle-Regeneration wasserstoffhaltiges Reduktionsgas zuführt, bei einer höchsten Temperatur von 400 bis 550°C den Schwefel und die schwefelhaltigen Verbindungen von der Aktivkohle entfernt und aus der Aktivkohle-Regeneration ein Schwefelverbindungen enthaltendes Reduktionsgas abzieht, das man in die Al$_2$O$_3$-Regeneration leitet, mit dem Schwefelverbindungen enthaltenden Reduktionsgas bei höchsten Temperaturen von 200 bis 400°C die Beladung des Aluminiumoxids zu Schwefel und Stickstoff reduziert und die Beladung desorbiert, und schwefelhaltiges Desorptionsgas ableitet.

2. Verfahren nach Anspruch 1, dadurch gekennzeichnet, daß man das schwefelhaltige Desorptionsgas kühlt, den dabei auskondensierenden flüssigen Schwefel abzieht und das Desorptionsgas mindestens teilweise in die Aktivkohle-Regeneration leitet.

3. Verfahren nach Anspruch 1 oder 2, dadurch gekennzeichnet, daß man das Schwefelverbindungen enthaltende Reduktionsgas aus der Aktivkohle-Regneration kühlt, wasserhaltiges Kondensat abtrennt und mindestens einen Teilstrom des gekühlten Reduktionsgases auf 300 bis 500°C erhitzt, bevor man es in die Al$_2$O$_3$-Regeneration leitet.

4. Verfahren nach Anspruch 1 oder einem der folgenden, dadurch gekennzeichnet, daß man zumindest in der Anfahrphase einen Teilstrom des Schwefelverbindungen enthaltenden Reduktionsgases aus der Aktivkohle-Regeneration auf 300 bis 500°C erhitzt und in die Aktivkohle-Regeneration zurückleitet.

5. Verfahren nach Anspruch 3 oder 4, dadurch gekennzeichnet, daß man einen Teilstrom des auf 300 bis 500°C erhitzten, Schwefelverbindungen enthaltenden Reduktionsgases im Gleichstrom mit dem in die Al$_2$O$_3$-Regeneration zufließenden Aluminiumoxid führt.

## Claims

1. A process of removing nitrogen oxides (NO$_x$) and sulfur oxides from an exhaust gas which contains nitrogen and water vapor and which at temperatures of 40 to 120°C is contacted with activated alumina and activated carbon as catalysts, wherein the alumina mainly combines with the nitrogen oxides, the activated carbon removes the sulfur oxides and combines with them to form sulfuric acid, and a reducing gas is used to regenerate the laden catalysts, characterized in that the exhaust gas is first conducted over activated alumina to substantially remove the nitrogen oxides and to remove a part of the sulfur oxides at the same time, the partly purified exhaust gas, which contains oxygen and water vapor, is subsequently conducted over the activated carbon, the laden alumina is regenerated in an $Al_2O_3$ regenerator and separately therefrom the laden activated carbon is regenerated in an activated carbon regenerator, the activated carbon regenerator is supplied with hydrogen-containing reducing gas, the sulfur and the sulfur-containing compounds are removed from the activated carbon at a maximum temperature of 400 to 550°C, a reducing gas which contains sulfur compounds is withdrawn from the activated carbon regenerator and is fed to the $Al_2O_3$ regenerator, the reducing gas which contains sulfur compounds is used at maximum temperatures of 200 to 400°C to reduce the loading of the alumina to form sulfur and nitrogen and to desorb the loading, and a sulfur-containing desorption gas is discharged.

2. A process according to claim 1, characterized in that the sulfur-containing desorption gas is cooled, the liquid sulfur which is thus formed by condensation is withdrawn and at least part of the desorption gas is fed to the activated carbon regenerator.

3. A process according to claim 1 or 2, characterized in that the reducing gas which contains sulfur compounds and comes from the activated carbon regenerator is cooled, aqueous condensate is removed and at least a partial stream of the cooled reducing gas is heated to 300 to 500°C before it is fed to the $Al_2O_3$ regenerator.

4. A process according to claim 1 or any of the following claims, characterized in that at least during the start-up phase a partial stream of the reducing gas from the activated carbon regenerator, which reducing gas contains sulfur compounds, is heated to 300 to 500°C and is returned to the activated carbon regenerator.

5. A process according to claim 3 or 4, characterized in that a partial stream of the reducing gas which contains sulfur compounds and has been heated to 300 to 500°C is cocurrently conducted with the alumina flowing into the $Al_2O_3$ regenerator.

**Revendications**

1. Procédé pour éliminer des oxydes d'azote ($NO_x$) et des oxydes de soufre d'un effluent gazeux qui contient de l'oxygène et de la vapeur d'eau et que l'on met en contact à des températures de 40 à 120°C avec de l'oxyde d'aluminium actif et du charbon actif servant de catalysateur, l'oxyde d'aluminium fixant surtout les oxydes d'azote et le charbon actif éliminant les oxydes de soufre et les fixant sous forme d'acide sulfurique, avec utilisation de gaz réducteur pour régénérer les catalyseurs chargés, caractérisé en ce qu'il consiste à envoyer d'abord l'effluent gazeux sur de l'oxyde d'aluminium activé et à éliminer ainsi, dans une grande mesure, les oxydes d'azote et, en même temps, une partie des oxydes de soufre et, ensuite, à envoyer l'effluent gazeux partiellement épuré, contenant de l'oxygène et de la vapeur d'eau, sur le charbon actif, à régénérer l'oxyde d'aluminium chargé dans une régénération d'$Al_2O_3$, et indépendamment de cela, à régénérer le charbon actif chargé dans une régénération de charbon actif en envoyant du gaz réducteur contenant de l'hydrogène à la régénération du charbon actif, en éliminant, à une température élevée de 400 à 550°C, le soufre et les composés soufrés du charbon actif et en soutirant de la régénération du charbon actif un gaz réducteur qui contient des composés soufrés et que l'on envoie à la régénération de l'$Al_2O_3$, à réduire à des températures très élevées de 200 à 400°C, par le gaz réducteur contenant des composés soufrés, la charge de l'oxyde d'aluminium en soufre et en azote, et à désorber la charge et à évacuer le gaz de désorption contenant du soufre.

2. Procédé suivant la revendication 1, caractérisé en ce qu'il consiste à refroidir le gaz de désorption contenant du soufre, à soutirer le soufre liquide condensé et à envoyer le gaz de désorption au moins partiellement à la régénération du charbon actif.

3. Procédé suivant la revendication 1 ou 2, caractérisé en ce qu'il consiste à refroidir le gaz réducteur contenant des composés soufrés et provenant de la régénération du charbon actif, à séparer le produit condensé contenant de l'eau et à porter au moins un courant partiel du gaz réducteur refroidi entre 300 et 500°C, avant de l'envoyer à la régénération de l'$Al_2O_3$.

4. Procédé suivant la revendication 1 ou l'une des suivantes, caractérisé en ce qu'il consiste à porter, entre 300 et 500°C, au moins dans la phase de démarrage, un courant partiel du gaz réducteur contenant des composés soufrés et provenant de la régénération du charbon actif et à le retourner à la régénération du charbon actif.

5. Procédé suivant la revendication 3 ou 4, caractérisé en ce qu'il consiste à envoyer un courant partiel du gaz réducteur, porté entre 300 et 500°C et contenant des composés soufrés, suivant un courant de même sens que l'oxyde d'aluminium envoyé à la régénération de l'$Al_2O_3$.

EP 0 230 058 B1